# EUROPÄISCHE PATENTSCHRIFT

(11) **EP 2 499 774 B1**
(45) Veröffentlichungstag und Bekanntmachung des Hinweises auf die Patenterteilung: **12.04.2017**
(21) Anmeldenummer: 10765432.9
(22) Anmeldetag: 12.10.2010
(51) Int. Cl.: H04L 9/08, G06F 21/00, G05B 19/418

(54) **VERFAHREN UND SYSTEM ZUR BESCHLEUNIGTEN ENTSCHLÜSSELUNG VON KRYPTOGRAPHISCH GESCHÜTZTEN NUTZDATENEINHEITEN**
METHOD AND SYSTEM FOR THE ACCELERATED DECRYPTION OF CRYPTOGRAPHICALLY PROTECTED USER DATA UNITS
PROCÉDÉ ET SYSTÈME POUR LE DÉCHIFFRAGE ACCÉLÉRÉ D'UNITÉS DE DONNÉES UTILES PROTÉGÉES CRYPTOGRAPHIQUEMENT

(30) Priorität: 09.11.2009 DE 102009052456
(43) Veröffentlichungstag der Anmeldung: 19.09.2012
(73) Patentinhaber: Siemens Aktiengesellschaft, 80333 München (DE)
(72) Erfinder: BRAUN, Michael, 80999 München (DE); DICHTL, Markus, 80636 München (DE); MEYER, Bernd, 81739 München (DE)
(86) Internationale Anmeldenummer: PCT/EP2010/065266
(87) Internationale Veröffentlichungsnummer: WO 2011/054630

(56) Entgegenhaltungen:
- WO-A1-2007/121587
- DE-A1-102004 055 814
- US-A1- 2006 212 706
- US-A1- 2008 256 646
- US-B1- 6 918 038

## Beschreibung

Die Erfindung betrifft ein Verfahren und ein System zur beschleunigten Entschlüsselung von kryptographisch geschützten Nutzdateneinheiten, insbesondere zur beschleunigten Entschlüsselung von hybrid verschlüsselten Daten.

Beim Transport von Daten von einer Sendeeinrichtung zu einer Empfangseinrichtung über einen Übertragungskanal werden diese Daten in vielen Fällen verschlüsselt übertragen, um einen Zugriff unberechtigter Dritter auf die Daten zu verhindern. Bekannt sind verschiedene Verschlüsselungsverfahren, insbesondere asymmetrische und symmetrische Verschlüsselungsverfahren. Bei einem herkömmlichen hybriden Verschlüsselungsverfahren wird eine asymmetrische Verschlüsselung mit einer symmetrischen Verschlüsselung kombiniert. Dabei wird zunächst mittels eines asymmetrischen Verschlüsselungsverfahrens ein generierter Sitzungsschlüssel asymmetrisch verschlüsselt und zwischengespeichert. Mit dem generierten unverschlüsselten Sitzungsschlüssel werden dann unter Einsatz eines symmetrischen Verschlüsselungsverfahrens die eigentlich zu übertragenen Nutzdaten verschlüsselt und nach Zwischenspeicherung über den Übertragungskanal zu einer Empfangseinrichtung transportiert. Auf Seiten der Empfangseinrichtung erfolgt in entsprechender Weise eine Entschlüsselung. Der Einsatz eines hybriden Verschlüsselungsverfahrens bewirkt, dass die Nutzdaten einerseits mit einem asymmetrischen Verschlüsselungsverfahren verschlüsselt werden, wobei dies ein asymmetrisches Schlüsselmanagement erlaubt, und andererseits die hohe Performance bzw. die geringen Ansprüche an die Rechenleistung zur Verund Entschlüsselung der Nutzdaten aufgrund des verwendeten symmetrischen Verschlüsselungsverfahrens ausgenutzt werden. Das asymmetrische Schlüsselmanagement verwendet Schlüsselpaare, die aus einem öffentlichen Schlüssel zum Verschlüsseln und einen privaten Schlüssel zum Entschlüsseln bestehen. Aufgrund des asymmetrischen Schlüsselmanagements muss der öffentliche Schlüssel, der bei dem asymmetrischen Verschlüsselungsverfahren eingesetzt wird, nicht geheim gehalten werden. Der Einsatz des symmetrischen Ver- und Entschlüsselungsverfahrens für die Nutzdaten führt zu erhöhten Datenraten im Vergleich zu asymmetrischen Verschlüsselungsverfahren bei vergleichbarem Sicherheitsniveau der eingesetzten Schlüssellängen.

Bei herkömmlichen hybriden Verschlüsselungsverfahren stellt in vielen praktischen Anwendungsfällen der Public-Key Anteil des hybriden Verschlüsselungsverfahrens einen Performance-Engpass dar. Dies gilt insbesondere bei Software-Implementierungen von kryptographischen Verfahren, beispielsweise bei Embedded Systems, Mikrocontrollern und Smart Cards. Deshalb wird bei herkömmlichen Systemen, die hybride Verschlüsselungsverfahren einsetzen, in vielen Fällen eine spezielle Hardware, beispielsweise Langzahlenrechenwerke, Kryptoprozessoren oder Hardwaremultiplizierer, zur Beschleunigung der Public-Key Berechnungen bzw. asymmetrischen Ver- und Entschlüsselung verwendet. Die im Zuge der asymmetrischen Verund Entschlüsselung durchgeführten Public-Key Operationen bzw. Berechnungsschritte sind komplex und bedürfen einer hohen Rechenleistung bzw. sind zeitaufwändig.

Es ist daher eine Aufgabe der vorliegenden Erfindung, ein Verfahren zu schaffen, welches ein hybrides Verschlüsselungsverfahren beschleunigt, ohne dass die Anforderungen an die Rechenleistung bzw. die Komplexität der dabei eingesetzten Schaltungen merklich erhöht werden.

Diese Aufgabe wird erfindungsgemäß durch ein Verfahren mit den im Patentanspruch 1 angegebenen Merkmalen gelöst.

Die Erfindung schafft ein Verfahren zur beschleunigten Entschlüsselung von kryptographisch geschützten Nutzdateneinheiten mit den folgenden Schritten:
(a) Entschlüsseln eines empfangenen asymmetrisch verschlüsselten Schlüssels (ENC-K_{OEM}) durch eine Empfangseinrichtung mittels eines privaten Schlüssels (K_{PRIV}), falls die Überprüfung der empfangenen zugehörigen Schlüsselidentifizierung (K_{OEM-}ID) des kryptographischen Schlüssels (K_{OEM}) ergibt, dass der kryptographische Schlüssel (K_{OEM}) noch nicht entschlüsselt in der Empfangseinrichtung vorhanden ist; und
(b) Entschlüsseln der empfangenen kryptographisch verschlüsselten Nutzdateneinheit (ENC-NDE) mit dem in der Empfangseinrichtung vorhandenen kryptographischen Schlüssel (K_{OEM}) oder mit dem mittels des privaten Schlüssels (K_{PRIV}) entschlüsselten kryptographischen Schlüssel (K_{OEM}), falls der kryptographische Schlüssel (K_{OEM}) nicht in der Empfangseinrichtung vorhanden ist.

Bei einer Ausführungsform des erfindungsgemäßen Verfahrens wird, falls die Überprüfung der empfangenen Schlüsselidentifizierung ergibt, dass der zugehörige kryptographische Schlüssel noch nicht in der Empfangseinrichtung vorhanden ist, der mittels des privaten Schlüssels entschlüsselte kryptographische Schlüssel zusammen mit seiner zugehörigen Schlüsselidentifizierung gespeichert.

Bei einer Ausführungsform des erfindungsgemäßen Verfahrens werden die Nutzdateneinheiten durch eine Softwarekomponente eines Softwarekomponentenherstellers OEM gebildet.

Bei einer möglichen Ausführungsform des erfindungsgemäßen Verfahrens wird der kryptographische Schlüssel K_{OEM} durch einen Sitzungsschlüssel des Softwarekomponentenherstellers gebildet.

Bei einer möglichen Ausführungsform des erfindungsgemäßen Verfahrens wird die Schlüsselidentifizierung durch einen Hash- oder Prüfwert des jeweiligen kryptographischen Schlüssels gebildet.

Bei einer möglichen Ausführungsform des erfindungsgemäßen Verfahrens wird die Schlüsselidentifizierung durch eine generierte Zufallszahl eines Zufallsgenerators der Sendeeinrichtung gebildet.

Bei einer alternativen Ausführungsform des erfindungsgemäßen Verfahrens wird die Schlüsselidentifizierung durch einen generierten Zählwert eines Zählers der Sendeeinrichtung gebildet.

Bei einer Ausführungsform des erfindungsgemäßen Verfahrens werden die verschlüsselte Nutzdateneinheit, der zugehörige asymmetrisch verschlüsselte kryptographische Schlüssel und dessen Schlüsselidentifizierung von der Sendeinrichtung zu der Empfangseinrichtung über ein Netzwerk oder gespeichert auf einem Datenträger transportiert.

Bei einer Ausführungsform des erfindungsgemäßen Verfahrens wird die Sendeeinrichtung durch eine Entwicklungsvorrichtung eines Softwarekomponentenherstellers zur Entwicklung von Softwarekomponenten gebildet.

Bei einer möglichen Ausführungsform des erfindungsgemäßen Verfahrens wird die Empfangseinrichtung durch eine Zielsystemvorrichtung eines Anwenders zur Ausführung von Softwarekomponenten gebildet.

Bei einer möglichen Ausführungsform des erfindungsgemäßen Verfahrens wird die Empfangseinrichtung durch eine speicherprogrammierbare Steuerung gebildet.

Die Erfindung schafft ferner ein System zur beschleunigten Entschlüsselung von kryptographisch geschützten Nutzdateneinheiten mit:
(a) einer Sendeeinrichtung, welche aufweist:
   - eine erste Verschlüsselungseinheit zur asymmetrischen Verschlüsselung eines kryptographischen Schlüssels (K_{OEM}) mittels eines öffentlichen Schlüssels (K_{PUB}) ;
   - eine zweite Verschlüsselungseinheit zur Verschlüsselung mindestens einer Nutzdateneinheit (NDE) mittels des kryptographischen Schlüssels (K_{OEM}) und
   - eine Schnittstelle zum Bereitstellen der verschlüsselten Nutzdateneinheit (ENC-NDE), des asymmetrisch verschlüsselten Schlüssels (ENC-K_{OEM}) und einer zugehörigen Schlüsselidentifizierung (K_{OEM-}ID) des kryptographischen Schlüssels (K_{OEM}) ;
(b) Transportmittel zum Transportieren der verschlüsselten Nutzdateneinheit (ENC-NDE), des asymmetrisch verschlüsselten Schlüssels (ENC-K_{OEM}) und der zugehörigen Schlüsselidentifizierung (K_{OEM-}ID) des kryptographischen Schlüssels (K_{OEM}) ; und mit
(c) einer Empfangseinrichtung, welche aufweist:
   - eine Prüfeinheit zum Überprüfen anhand der empfangenen Schlüsselidentifizierung (K_{OEM-}ID), ob der transportierte asymmetrisch verschlüsselte Schlüssel (ENC-K_{OEM}) bereits in entschlüsselter Form in der Empfangseinrichtung vorhanden ist;
   - eine erste Entschlüsselungseinheit zum Entschlüsseln des empfangenen asymmetrischen verschlüsselten Schlüssels (ENC-K_{OEM}) mittels eines privaten Schlüssels (K_{PRIV}), falls die Überprüfung der zugehörigen Schlüsselidentifizierung (K_{OEM-}ID) des kryptographischen Schlüssels (K_{OEM}) ergibt, dass der verschlüsselt empfangene kryptographische Schlüssel (K_{OEM}) noch nicht in entschlüsselter Form in der Empfangseinrichtung vorliegt;
   - eine zweite Entschlüsselungseinheit, die die empfangene kryptographisch verschlüsselte Nutzdateneinheit (ENC-NDE) mit dem in der Empfangseinrichtung bereits in entschlüsselter Form vorhandenen kryptographischen Schlüssel (K_{OEM}) oder mit dem durch die erste Entschlüsselungseinheit entschlüsselten kryptographischen Schlüssel (K_{OEM}) entschlüsselt.

Die Erfindung schafft ferner eine Sendeeinrichtung mit:
- einer ersten Verschlüsselungseinheit zur asymmetrischen Verschlüsselung eines kryptographischen Schlüssels (K_{OEM}) mittels eines öffentlichen Schlüssels (K_{PUB}) ;
- einer zweiten Verschlüsselungseinheit zur Verschlüsselung mindestens einer Nutzdateneinheit (NDE) mittels des kryptographischen Schlüssels (K_{OEM}) ; und mit
- einer Schnittstelle zum Bereitstellen der verschlüsselten Nutzdateneinheit (ENC-NDE), des asymmetrisch verschlüsselten Schlüssels (ENC-K_{OEM}) und einer zugehörigen Schlüsselidentifizierung (K_{OEM}-ID) des kryptographischen Schlüssels (K_{OEM}).

Die Erfindung schafft ferner eine Empfangseinrichtung mit:
- einer Prüfeinheit zum Überprüfen anhand der empfangenen Schlüsselidentifizierung (K_{OEM-}ID), ob der transportierte asymmetrisch verschlüsselte Schlüssel (ENC-K_{OEM}) bereits in entschlüsselter Form in der Empfangseinrichtung vorhanden ist;
- einer ersten Entschlüsselungseinheit zum Entschlüsseln des empfangenen asymmetrischen verschlüsselten Schlüssels (ENC-K_{OEM}) mittels eines privaten Schlüssels (K_{PRIV}), falls die Überprüfung der zugehörigen Schlüsselidentifizierung (K_{OEM}-ID) des kryptographischen Schlüssels (K_{OEM}) ergibt, dass der empfangene kryptographische Schlüssel (K_{OEM}) noch nicht in entschlüsselter Form vorliegt; und mit
- einer zweiten Entschlüsselungseinheit, die die empfangene kryptographisch verschlüsselte Nutzdateneinheit (ENC-NDE) mit dem in der Empfangseinheit bereits in entschlüsselter Form vorhandenen kryptographischen Schlüssel (K_{OEM}) oder mit dem durch die erste Entschlüsselungseinheit entschlüsselten kryptographischen Schlüssel (K_{OEM}) entschlüsselt.

Im Weiteren werden mögliche Ausführungsformen des erfindungsgemäßen Verfahrens des erfindungsgemäßen Systems unter Bezugnahme auf die beigefügten Figuren beschrieben.
- Fig. 1: zeigt ein Ablaufdiagramm zur Darstellung einer möglichen Ausführungsform des erfindungsgemäßen Verfahrens;
- Fig. 2: zeigt ein Blockschaltbild zur Darstellung einer möglichen Ausführungsform des erfindungsgemäßen Systems.

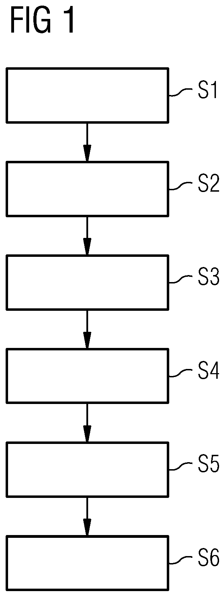

Wie man aus Fig. 1 erkennen kann, weist eine verschlüsselte Datenübertragung ein Verfahren zur beschleunigten Entschlüsselung von kryptographisch geschützten Nutzdaten NDE gemäß der Erfindung, wobei die in sechs Schritten S1 bis S6 erfolgende Datenübertragung in den Schritten S5, S6 das erfindungsgemäße Entschlüsselungsverfahren beinhaltet.

In einem ersten Schritt S1 wird zunächst ein kryptographischer Schlüssel generiert. Bei diesem kryptographischen Schlüssel kann es sich insbesondere um einen kryptographischen Schlüssel eines Softwarekomponentenherstellers OEM (Original Equipment Manufacturer) handeln. Der generierte kryptographische Schlüssel K_{OEM} wird in Schritt S1 mit einer zugehörigen Schlüsselidentifizierung K_{OEM}-ID versehen. Bei einer möglichen Ausführungsform der Übertragung wird die Schlüsselidentifizierung K_{OEM}-ID durch einen Hash- oder Prüfwert des jeweiligen kryptographischen Schlüssels K_{OEM} gebildet bzw. berechnet. Bei einer alternativen Ausführungsform wird die Schlüsselidentifizierung K_{OEM}-ID durch eine generierte Zufallszahl gebildet, die beispielsweise durch einen Zufallsgenerator der Sendeeinrichtung generiert wird. Bei einer weiteren möglichen Ausführungsform wird die Schlüsselidentifizierung K_{OEM}-ID durch einen generierten Zählwert eines Zählers innerhalb der Sendeeinrichtung generiert.

Nach der Generierung des kryptographischen Schlüssels K_{OEM} sowie einer zugehörigen Schlüsselidentifizierung in Schritt S1 erfolgt in einem Schritt S2 eine asymmetrische Verschlüsselung des generierten kryptographischen Schlüssels K_{OEM} mittels eines öffentlichen kryptographischen Schlüssels K_{pub} durch die Sendeeinrichtung.

In einem weiteren Schritt S3 wird mindestens eine Nutzdateneinheit NDE mittels des generierten kryptographischen Schlüssels K_{OEM} durch die Sendeeinrichtung verschlüsselt. In einer möglichen Ausführungsform ist die Nutzdateneinheit NDE eine Softwarekomponente SWK bzw. ein Softwarebaustein eines Softwarekomponentenherstellers OEM, wobei die Sendeeinrichtung einen Teil einer Entwicklungsvorrichtung bzw. eine Entwicklungsumgebung des Softwarekomponentenherstellers darstellt.

In einem weiteren Schritt S4 wird die verschlüsselte Nutzdateneinheit ENC-NDE bzw. die verschlüsselte Softwarekomponente und der asymmetrisch verschlüsselte kryptographische Schlüssel ENC-K_{OEM} sowie die zugehörige Schlüsselidentifizierung (K_{OEM}-ID) des kryptographischen Schlüssels K_{OEM} von der Sendeeinrichtung zu einer Empfangseinrichtung transportiert. Der Transport kann dabei bei einer möglichen Ausführungsform über eine Leitung oder ein Netzwerk erfolgen. Bei einer alternativen Ausführungsform erfolgt der Transport mittels eines Speichermittels bzw. eines Datenträgers.

Auf der Empfangsseite erfolgt das erfindungsgemäße Entschlüsselungsverfahren, wobei in einem Schritt S5 eine Entschlüsselung des empfangenen asymmetrisch verschlüsselten Schlüssels ENC- K_{OEM} mittels eines privaten Schlüssels Kₚᵣᵢᵥ durchgeführt wird, falls eine Überprüfung der empfangenen zugehörigen Schlüsselidentifizierung K_{OEM}-ID des kryptographischen Schlüssels ergibt, dass der kryptographische Schlüssel K_{OEM} noch nicht entschlüsselt in der Empfangseinrichtung vorhanden ist.

In einem weiteren Schritt S6 wird die empfangene kryptographische verschlüsselte Nutzdateneinheit ENC-NDE entweder mit dem in der Empfangseinrichtung bereits vorhandenen kryptographischen Schlüssel K_{OEM} oder mit dem mittels des privaten Schlüssels Kₚᵣᵢᵥ entschlüsselten kryptographischen Schlüssel K_{OEM} entschlüsselt, falls der kryptographische Schlüssel (K_{OEM}) noch nicht in der Empfangseinrichtung vorhanden ist.

Falls die Überprüfung im Schritt S5 der empfangenen Schlüsselidentifizierung K_{OEM}-ID ergibt, dass der zugehörige kryptographische Schlüssel K_{OEM} noch nicht in der Empfangseinrichtung vorhanden ist, wird der mittels des privaten Schlüssels Kₚᵣᵢᵥ entschlüsselte kryptographische Schlüssel K_{OEM} zusammen mit seiner zugehörigen Schlüsselidentifizierung K_{OEM}-ID in der Empfangseinrichtung zur weiteren Verwendung gespeichert.

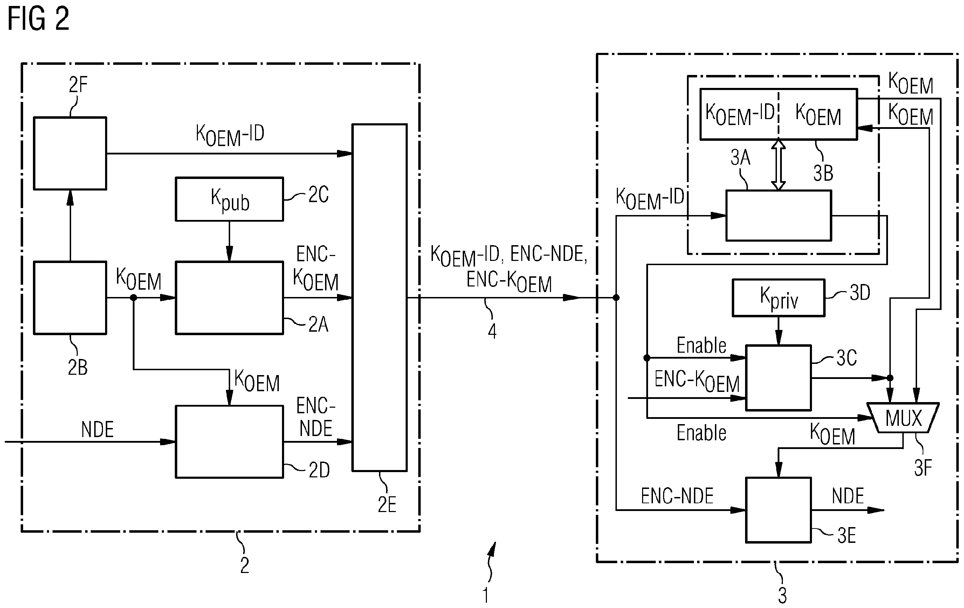

Fig. 2 zeigt ein Blockschaltbild einer möglichen Ausführungsform eines erfindungsgemäßen Systems 1 zur beschleunigten Entschlüsselung von kryptographisch geschützten Nutzdateneinheiten. Das System 1 weist eine Sendeeinrichtung 2 und eine Empfangseinrichtung 3 auf, die über Transportmittel 4 miteinander verbunden sind. Bei der in Fig. 2 dargestellten Ausführungsform ist das Transportmittel 4 eine Datenleitung. Bei einer alternativen Ausführungsform ist das Transportmittel ein Netzwerk bzw. eine Vielzahl von Netzwerken. Bei dem Netzwerk kann es sich auch um ein drahtloses Netzwerk handeln.

Bei einer alternativen Ausführungsform ist das Transportmittel ein Speicher bzw. ein Datenträger, der die Daten in gespeicherter Form transportiert.

Die Sendeeinrichtung 2 weist eine erste Verschlüsselungseinheit 2A zur asymmetrischen Verschlüsselung eines generierten kryptographischen Schlüssels K_{OEM} mittels eines öffentlichen Schlüssels K_{pub} auf. Der kryptographische Schlüssel K_{OEM} kann beispielsweise in einem Schlüsselgenerator 2B der Sendeeinrichtung 2 generiert werden. Der öffentliche Schlüssel K_{pub} kann in einer möglichen Ausführungsform in einem Register oder einem Speicher 2C der Sendeeinrichtung 2 hinterlegt sein.

Die Sendeeinrichtung 2 enthält ferner eine zweite Verschlüsselungseinheit 2D zur Verschlüsselung mindestens einer Nutzdateneinheit NDE mittels des generierten kryptographischen Schlüssels K_{OEM}. Die Nutzdateneinheit NDE stammt bei der in Fig. 2 dargestellten Ausführungsform von einer Nutzdatenquelle außerhalb der Sendeeinrichtung 2. Bei der Nutzdateneinheit NDE kann es sich insbesondere um eine Softwarekomponente SWK handeln, die von einem Softwarekomponentenhersteller OEM mittels eines Entwicklungstools programmiert bzw. hergestellt wird. Die Nutzdateneinheit NDE bzw. die programmierte Softwarekomponente SWK kann beispielsweise ein kurzes ablauffähiges Programm oder ein Unterprogramm darstellen. Die Softwarekomponente weist dabei einen Source- bzw. Quellcode oder Objectcode des jeweiligen Programms bzw. Unterprogramms auf. Dieser Quellcode oder Objectcode bzw. diese Nutzdateneinheit wird mittels des generierten kryptographischen Schlüssel K_{OEM} durch die zweite Verschlüsselungseinheit 2D der Sendeeinrichtung 2 verschlüsselt und über eine Schnittstelle 2E der Sendeeinrichtung 2 bereitgestellt. Die Sendeeinrichtung 2 kann in einer Entwicklungsumgebung des Softwarekomponentenherstellers OEM integriert sein. Die Schnittstelle 2E stellt die verschlüsselte Nutzdateneinheit ENC-NDE bzw. die verschlüsselte Softwarekomponente, den asymmetrisch verschlüsselten Schlüssel ENC-K_{OEM} sowie die zugehörige Schlüsselidentifizierung K_{OEM}-ID des kryptographischen Schlüssels K_{OEM} bereit.

Bei einer möglichen Ausführungsform weist die Sendeeinrichtung 2 eine Einheit 2F zum Bereitstellen einer zugehörigen Schlüsselidentifizierung K_{OEM}-ID auf, die beispielsweise durch den Schlüsselgenerator 2B bei der Bereitstellung des kryptographischen Schlüssels K_{OEM} getriggert wird. Bei der Einheit 2F kann es sich bei einer möglichen Ausführungsform um einen Zufallsgenerator handeln, der eine Zufallszahl als Schlüsselidentifizierung K_{OEM}-ID generiert. Bei einer alternativen Ausführungsform handelt es sich bei der Einheit 2F um einen Zähler, welcher einen Zählwert generiert, der als Schlüsselidentifizierung K_{OEM}-ID bereitgestellt wird.

Das Transportmittel 4 transportiert die verschlüsselte Nutzdateneinheit ENC-NDE, den asymmetrisch verschlüsselten Schlüssel ENC-K_{OEM} und die zugehörige Schlüsselidentifizierung K_{OEM}-ID des kryptographischen Schlüssels K_{OEM} von der Sendeeinrichtung 2 zu der Empfangseinrichtung 3. Bei dem Transportmittel 4 kann es sich um eine Datenleitung, ein oder mehrere Netzwerke oder um einen Datenträger handeln.

Die Empfangseinrichtung 3 des erfindungsgemäßen Systems 1, wie es in Fig. 2 dargestellt ist, weist eine Prüfeinheit 3A auf, welche anhand der empfangenen Schlüsselidentifizierung K_{OEM}-ID überprüft, ob der transportierte asymmetrisch verschlüsselte Schlüssel ENC-K_{OEM} bereits in entschlüsselter Form in der Empfangseinrichtung 3 vorhanden ist. Bei einer möglichen Ausführungsform hat die Prüfeinheit 3A hierfür Zugriff auf einen internen Speicher 3B der Empfangseinrichtung 3, in welchem mehrere Schlüsselidentifizierungen K_{OEM}-ID sowie die zugehörigen kryptographischen Schlüssel K_{OEM} abgelegt sind.

Die Empfangseinrichtung 3 weist ferner eine erste Entschlüsselungseinheit 3C auf, die zum Entschlüsseln des empfangenen asymmetrisch verschlüsselten Schlüssels ENC-K_{OEM} mittels eines privaten Schlüssels Kₚᵣᵢᵥ vorgesehen ist, falls die Überprüfung der zugehörigen Schlüsselidentifizierung K_{OEM}-ID des kryptographischen Schlüssels K_{OEM} durch die Prüfeinheit 3A ergibt, dass der verschlüsselt empfangene kryptographische Schlüssel K_{OEM} noch nicht in entschlüsselter Form in dem Speicher 3B der Empfangseinrichtung 3 vorliegt. Bei einer möglichen Ausführungsform erhält die erste Entschlüsselungseinheit 3C ein entsprechendes Steuersignal (Enable) von der Prüfeinheit 3A über eine Steuersignalleitung. Der private kryptographische Schlüssel Kₚᵣᵢᵥ kann in einer geschützten Speichereinheit 3D der Empfangseinrichtung 3 abgelegt sein.

Die Empfangseinrichtung 3 weist ferner eine zweite Entschlüsselungseinheit 3E auf, die die empfangene kryptographisch verschlüsselte Nutzdateneinheit ENC-NDE mit dem in der Empfangseinrichtung 3 bereits in entschlüsselter Form vorhandenen kryptographischen Schlüssel K_{OEM} oder alternativ mit dem durch die erste Entschlüsselungseinheit 3C entschlüsselten kryptographischen Schlüssel K_{OEM} entschlüsselt. Bei der in Fig. 2 dargestellten Ausführungsform wird ein Multiplexer 3F der Empfangseinrichtung 3 in Abhängigkeit von einem Steuersignal geschaltet, das von der Prüfeinheit 3A stammt. Falls die Prüfeinheit 3A zu dem Ergebnis kommt, dass der verschlüsselt empfangene kryptographische Schlüssel K_{OEM} noch nicht in verschlüsselter Form beispielsweise in dem Speicher 3B der Empfangseinrichtung 3 vorliegt, aktiviert sie die erste Entschlüsselungseinheit 3C zum Entschlüsseln des empfangenen asymmetrischen verschlüsselten Schlüssels mittels des privaten Schlüssels Kₚᵣᵢᵥ und schaltet den Ausgang der ersten Entschlüsselungseinheit 3C, welche den entschlüsselten kryptographischen Schlüssel K_{OEM} liefert, mittels des Multiplexers 3F zu der zweiten Entschlüsselungseinheit 3E. Stellt die Prüfeinheit 3A umgekehrt fest, dass der kryptographische Schlüssel K_{OEM} bereits in gespeicherter Form in der Empfangseinrichtung 3 vorliegt, muss keine Entschlüsselung mehr durch die erste Entschlüsselungseinheit 3C erfolgen und der bereits gespeichert vorliegende kryptographische Schlüssel K_{OEM} wird mittels des Multiplexers 3F an die zweite Entschlüsselungseinheit 3E abgegeben. In diesem Falle kann die relativ aufwändige Entschlüsselung durch die erste Entschlüsselungseineinheit 3C entfallen, so dass die Entschlüsselung der kryptographisch geschützten Nutzdateneinheit NDE beschleunigt wird.

Bei einer möglichen Ausführungsform wird der kryptographische Schlüssel K_{OEM} durch einen Sitzungsschlüssel des Softwarekomponentenherstellers OEM gebildet. Bei einer möglichen Ausführungsform wird die übertragende Nutzdateneinheit NDE bzw. die übertragene Softwarekomponente SWK empfangsseitig durch eine Ausführeinheit bzw. einen Mikroprozessor ausgeführt. Bei der Empfangseinrichtung 3 kann es sich um einen Teil einer Zielsystemvorrichtung eines Anwenders zur Ausführung von Softwarekomponenten SWK bzw. Nutzdateneinheiten NDE handeln. Bei einer möglichen Ausführungsform weist die Empfangseinrichtung 3 eine speicherprogrammierbare Steuerung SPS auf.

Bei der erfindungsgemäßen Implementierung eines hybriden Verschlüsselungsverfahrens kann ein asymmetrisch zur Nutzdatenverschlüsselung verwendeter Sitzungsschlüssel mit im Klartext lesbaren Schlüsselidentifizierungen versehen werden.

Bei dem erfindungsgemäßen Verfahren wird vorzugsweise ein Verzeichnis aller bisher mit Hilfe eines Public-Key Verfahrens entschlüsselten Sitzungsschlüssel angelegt und aktualisiert. Dieses Verzeichnis kann sich beispielsweise in dem Speicher 3B der Empfangseinrichtung 3 befinden. Wird ein neuer hybrid verschlüsselter Datensatz bzw. eine Nutzdateneinheit zur Entschlüsselung empfangen, so wird zunächst überprüft, ob das Verzeichnis der bisher entschlüsselten Sitzungsschlüssel bereits die Schlüsselidentifizierung des jeweiligen Sitzungsschlüssels enthält und dieser zur eigentlichen Nutzdatenverschlüsselung des Datensatzes verwendet wurde. Enthält das Verzeichnis bereits die Schlüsselidentifizierung des Sitzungsschlüssels so wird der zugehörige Sitzungsschlüssel aus dem Verzeichnis ausgelesen und direkt mit der symmetrischen Entschlüsselung der Nutzdaten fortgefahren. Enthält das Verzeichnis jedoch keine solche Schlüsselidentifizierung oder wird bei der Entschlüsselung der Nutzdaten mit einem Sitzungsschlüssel aus dem Verzeichnis festgestellt, dass keine Authentifizierung der verschlüsselten Nutzdaten möglich ist, so wird nur in diesem Fall die vollständige hybride Entschlüsselung durchgeführt. Somit wird zunächst mit Hilfe des Public-Key Verfahrens der Sitzungsschlüssel, welcher zur symmetrischen Verschlüsselung der Nutzdaten verwendet wurde, rekonstruiert und anschließend werden mit Hilfe des berechneten Sitzungsschlüssels die Nutzdaten symmetrisch entschlüsselt. Der auf diese Weise berechnete Sitzungsschlüssel wird vorzugsweise zusammen mit seiner zugehörigen Schlüsselidentifizierung anschließend in das Verzeichnis bzw. den Speicher aufgenommen.

Entsprechend kann bei einer erneuten hybriden Verschlüsselung einer Nutzdateneinheit NDE vorgegangen werden, wenn der bereits bekannte Sitzungsschlüssel zur Verschlüsselung der Nutzdateneinheit verwendet werden soll. In diesem Fall muss die Public-Key Verschlüsselung des Sitzungsschlüssels nicht erneut berechnet werden. Es wird lediglich die symmetrische Verschlüsselung der Nutzdateneinheit ausgeführt.

Das Markieren bzw. Kennzeichnen von hybrid verschlüsselten Sitzungsschlüsseln bei dem erfindungsgemäßen Verfahren mittels der ver- und entschlüsselnden Einheiten ermöglicht es zu erkennen, ob bereits in der Vergangenheit einen bestimmter Sitzungsschlüssel mit Hilfe einer Public-Key Rechenoperation berechnet wurde. Ist dieser Schlüssel bereits im Verzeichnis der berechneten Schlüssel vorhanden, so kann bei dem erfindungsgemäßen Verfahren auf die erneute Ausführung der die Performance herabsetzenden Public-Key Operationen verzichtet werden. In diesem Falle wird der Ver- und Entschlüsselungsvorgang auf die symmetrischen Rechenoperationen mit den reinen Nutzdaten reduziert. Werden bei dem erfindungsgemäßen System bestimmte hybrid verschlüsselte Datensätze bzw. Nutzdateneinheiten immer wieder ver- oder entschlüsselt oder werden für mehrere Datensätze bzw. Nutzdateneinheiten der gleiche Sitzungsschlüssel verwendet, kann durch das erfindungsgemäße Verfahren die Performance bzw. Leistung des Systems bzw.

Computersystems wesentlich gesteigert werden.

Das erfindungsgemäße Verfahren, bei dem eine Schlüsselidentifizierung zur Kennzeichnung von Sitzungsschlüsseln eingesetzt wird, kann bei möglichen Ausführungsformen mit weiteren Verfahren zum Schutz vor Angriffen in vorberechneten Tabellen oder zur Minderung des Entropieverlustes des geheimen Schlüsselmaterials durch die im Klartext lesbaren Schlüsselidentifizierungen kombiniert werden.

Das erfindungsgemäße Verfahren und System lässt sich insbesondere zur sicheren bzw. vertraulichen Übertragung von Softwarekomponenten bzw. Nutzdateneinheiten von einer Entwicklungsumgebung 2 zu einer Zielsystemvorrichtung 3, beispielsweise einer speicherprogrammierten Steuerung SPS einsetzen. Bei den Schlüssel-IDs kann es sich in einer möglichen Ausführungsform auch um Hash- bzw. Prüfwerte der eigentlichen Schlüsseldaten handeln. Weiterhin ist es möglich, dass die Schlüsselkennzeichnung bzw. Schlüssel-ID zufällig und unabhängig von den Schlüsseldaten generiert wird.

## Patentansprüche

1. Verfahren zur beschleunigten Entschlüsselung von kryptographisch geschützten Nutzdateneinheiten (NDE), wobei die Nutzdateneinheit (NDE) durch eine Softwarekomponente (SWK) eines Softwarekomponentenherstellers (OEM) gebildet wird,
**gekennzeichnet durch** die folgenden Schritte:
(a) Entschlüsseln (S5) eines empfangenen asymmetrisch verschlüsselten kryptographischen Schlüssels (ENC-K_{OEM}) **durch** eine Empfangseinrichtung (3) mittels eines privaten Schlüssels (K_{PRIV}), falls die Überprüfung einer empfangenen zugehörigen Schlüsselidentifizierung (K_{OEM-}ID) des kryptographischen Schlüssels (K_{OEM}) ergibt, dass der kryptographische Schlüssel (K_{OEM}) noch nicht entschlüsselt in der Empfangseinrichtung (3) vorhanden ist, wobei der private Schlüssel (K_{PRIV}) in einer geschützten Speichereinheit (3D) der Empfangseinrichtung (3) abgelegt ist; und
(b) Entschlüsseln (S6) einer empfangenen kryptographisch verschlüsselten Nutzdateneinheit (ENC-NDE) mit dem in der Empfangseinrichtung (3) vorhandenen kryptographischen Schlüssel (K_{OEM}) oder mit dem mittels des privaten Schlüssels (K_{PRIV}) entschlüsselten kryptographischen Schlüssel (K_{OEM}), falls der kryptographische Schlüssel (K_{OEM}) nicht in der Empfangseinrichtung (3) vorhanden ist.

2. Verfahren nach Anspruch 1, wobei, falls die Überprüfung der empfangenen Schlüsselidentifizierung (K_{OEM}-ID) ergibt, dass der zugehörige kryptographische Schlüssel (K_{OEM}) noch nicht in der Empfangseinrichtung (3) vorhanden ist, der mittels des privaten Schlüssels (K_{PRIV}) entschlüsselte kryptographische Schlüssel (K_{OEM}) zusammen mit seiner zugehörigen Schlüsselidentifizierung (K_{OEM}-ID) in der Empfangseinrichtung (3) gespeichert wird.

3. Verfahren nach Anspruch 1, wobei der kryptographische Schlüssel (K_{OEM}) durch einen Sitzungsschlüssel des Softwarekomponentenherstellers (OEM) gebildet wird.

4. Verfahren nach Anspruch 1-3, wobei die Schlüsselidentifizierung (K_{OEM}-ID) durch einen Hash- oder Prüfwert des jeweiligen kryptographischen Schlüssels (K_{OEM}) gebildet wird.

5. Verfahren nach Anspruch 1-3, wobei die Schlüsselidentifizierung (K_{OEM}-ID) durch eine generierte Zufallszahl eines Zufallsgenerators (2F) einer Sendeeinrichtung (2) gebildet wird.

6. Verfahren nach Anspruch 1-3 wobei die Schlüsselidentifizierung (K_{OEM}-ID) durch einen generierten Zählwert eines Zählers (2F) der Sendeeinrichtung (2) gebildet wird.

7. Verfahren nach Anspruch 5-6, wobei die verschlüsselte Nutzdateneinheit (ENC-NDE), der zugehörige asymmetrisch verschlüsselte kryptographische Schlüssel (ENC-K_{OEM}) und dessen Schlüsselidentifizierung (K_{OEM}-ID) von der Sendeeinrichtung (2) zu der Empfangseinrichtung (3) über ein Netzwerk oder gespeichert auf einem Datenträger transportiert werden.

8. Verfahren nach Anspruch 5-7, wobei die Sendeeinrichtung (2) durch eine Entwicklungsvorrichtung eines Softwarekomponentenherstellers (OEM) zur Entwicklung von Softwarekomponenten (SWK) gebildet wird.

9. Verfahren nach Anspruch 1-8, wobei die Empfangseinrichtung (3) durch eine Zielsystemvorrichtung eines Anwenders zur Ausführung von Softwarekomponenten gebildet wird.

10. Verfahren nach Anspruch 9, wobei die Empfangseinrichtung (3) eine speicherprogrammierbare Steuerung (SPS) aufweist.

11. System (1) zur beschleunigten Entschlüsselung von kry tographisch geschützten Nutzdateneinheiten (NDE), wobei die Nutzdateneinheit (NDE) durch eine Softwarekomponente (SWK) eines Softwarekomponentenherstellers (OEM) gebildet wird, **gekennzeichnet durch**:
(a) eine Sendeeinrichtung (2), welche aufweist:
- eine erste Verschlüsselungseinheit (2A) zur asymmetrischen Verschlüsselung eines kryptographischen Schlüssels (K_{OEM}) mittels eines öffentlichen Schlüssels (K_{PUB}) ;
- eine zweite Verschlüsselungseinheit (2D) zur Verschlüsselung mindestens einer Nutzdateneinheit (NDE) mittels des kryptographischen Schlüssels (K_{OEM}) und
- eine Schnittstelle (2E) zum Bereitstellen der verschlüsselten Nutzdateneinheit (ENC-NDE), des asymmetrisch verschlüsselten Schlüssels (ENC-K_{OEM}) und einer zugehörigen Schlüsselidentifizierung (K_{OEM-}ID) des kryptographischen Schlüssels (K_{OEM}) ;
(b) Transportmittel (4) zum Transportieren der verschlüsselten Nutzdateneinheit (ENC-NDE), des asymmetrisch verschlüsselten Schlüssels (ENC-K_{OEM}) und der zugehörigen Schlüsselidentifizierung (K_{OEM}-ID) des kryptographischen Schlüssels (K_{OEM}) ; und mit
(c) eine Empfangseinrichtung (3), welche aufweist:
- eine Prüfeinheit (3A) zum Überprüfen anhand der empfangenen Schlüsselidentifizierung (K_{OEM-}ID), ob der transportierte asymmetrisch verschlüsselte Schlüssel (ENC-K_{OEM}) bereits in entschlüsselter Form in der Empfangseinrichtung (3) vorhanden ist;
- eine erste Entschlüsselungseinheit (3C) zum Entschlüsseln des empfangenen asymmetrischen verschlüsselten Schlüssels (ENC-K_{OEM}) mittels eines privaten Schlüssels (K_{PRIV}), falls die Überprüfung der zugehörigen Schlüsselidentifizierung (K_{OEM-}ID) des kryptographischen Schlüssels (K_{OEM}) ergibt, dass der verschlüsselt empfangene kryptographische Schlüssel (K_{OEM}) noch nicht in entschlüsselter Form in der Empfangseinrichtung (3) vorliegt;
- eine geschützte Speichereinheit (3D) zum Ablegen des privaten Schlüssels (K_{PRIV}) ;
- eine zweite Entschlüsselungseinheit (3E), die die empfangene kryptographisch verschlüsselte Nutzdateneinheit (ENC-NDE) mit dem in der Empfangseinrichtung bereits in entschlüsselter Form vorhandenen kryptographischen Schlüssel (K_{OEM}) oder mit dem **durch** die erste Entschlüsselungseinheit (3C) entschlüsselten kryptographischen Schlüssel (K_{OEM}) entschlüsselt.

12. Sendeeinrichtung (2), für ein System (1) beschleunigten Entschlüsselung von kryptographisch geschützten Nutzdateneinheiten (NDE) nach Anspruch 11, mit:
- einer ersten Verschlüsselungseinheit (2A) zur asymmetrischen Verschlüsselung eines kryptographischen Schlüssels (K_{OEM}) mittels eines öffentlichen Schlüssels (K_{PUB}) ;
- einer zweiten Verschlüsselungseinheit (2D) zur Verschlüsselung mindestens einer Nutzdateneinheit (NDE) mittels des kryptographischen Schlüssels (K_{OEM}) ; und mit
- einer Schnittstelle (2E) zum Bereitstellen der verschlüsselten Nutzdateneinheit (ENC-NDE), des asymmetrisch verschlüsselten Schlüssels (ENC-K_{OEM}) und einer zugehörigen Schlüsselidentifizierung (K_{OEM-}ID) des kryptographischen Schlüssels (K_{OEM}).

13. Empfangseinrichtung (3), für ein System zur beschleunigten Entschlüsselung von kryptographisch geschützten Nutzdateneinheiten (NDE) nach Anspruch 11, mit:
- einer Prüfeinheit (3A) zum Überprüfen anhand der empfangenen Schlüsselidentifizierung (K_{OEM-}ID), ob der transportierte asymmetrisch verschlüsselte Schlüssel (ENC-K_{OEM}) bereits in entschlüsselter Form in der Empfangseinrichtung (3) vorhanden ist;
- einer ersten Entschlüsselungseinheit (3C) zum Entschlüsseln des empfangenen asymmetrisch verschlüsselten Schlüssels (ENC-K_{OEM}) mittels eines privaten Schlüssels (K_{PRIV}), falls die Überprüfung der zugehörigen Schlüsselidentifizierung (K_{OEM}-ID) des kryptographischen Schlüssels (K_{OEM}) ergibt, dass der empfangene kryptographische Schlüssel (K_{OEM}) noch nicht in entschlüsselter Form vorliegt; und mit:
- einer zweiten Entschlüsselungseinheit (3E), die die empfangene kryptographisch verschlüsselte Nutzdateneinheit (ENC-NDE) mit dem in der Empfangseinheit (3) bereits in entschlüsselter Form vorhandenen kryptographischen Schlüssel (K_{OEM}) oder mit dem durch die erste Entschlüsselungseinheit (3C) entschlüsselten kryptographischen Schlüssel (K_{OEM}) entschlüsselt.

14. Computerprogramm zur Durchführung des Verfahrens nach Anspruch 1-10.

## Claims

1. Method for the accelerated decryption of cryptographically protected payload data units (NDE), wherein the payload data unit (NDE) is formed by a software component (SWK) of a software component manufacturer (OEM), **characterised by** the following steps:
(a) decryption (S5) of a received asymmetrically encrypted cryptographic key (ENC-K_{OEM}) by a receiver (3) by means of a private key (K_{PRIV}) if the verification of a received related key identification (K_{OEM}-ID) of the cryptographic key (K_{OEM}) shows that the cryptographic key (K_{OEM}) is not yet present in a decrypted state in the receiver (3), wherein the private key (K_{PRIV}) is stored in a protected storage unit (3D) in the receiver (3); and
(b) decryption (S6) of a received cryptographically encrypted payload data unit (ENC-NDE) using the cryptographic key (K_{OEM}) present in the receiver (3) or using the cryptographic key (K_{OEM}) decrypted by means of the private key (K_{PRIV}) if the cryptographic key (K_{OEM}) is not present in the receiver (3).

2. Method according to claim 1, wherein if verification of the received key identification (K_{OEM}-ID) shows that the related cryptographic key (K_{OEM}) is not yet present in the receiver (3), the cryptographic key (K_{OEM}) decrypted by means of the private key (K_{PRIV}) is stored in the receiver (3) together with its related key identification (K_{OEM}-ID).

3. Method according to claim 1, wherein the cryptographic key (K_{OEM}) is formed by a session key of the software component manufacturer (OEM).

4. Method according to claims 1 to 3, wherein the key identification (K_{OEM}-ID) is formed by a hash value or test value of the respective cryptographic key (K_{OEM}).

5. Method according to claims 1 to 3, wherein the key identification (K_{OEM}-ID) is formed by a generated random number of a random number generator (2F) of a transmitter (2).

6. Method according to claims 1 to 3, wherein the key identification (K_{OEM}-ID) is formed by a generated count value of a counter (2F) of the transmitter (2).

7. Method according to claims 5 to 6, wherein the encrypted payload data unit (ENC-NDE), the related asymmetrically encrypted cryptographic key (ENC-K_{OEM}) and its key identification (K_{OEM}-ID) are transported from the transmitter (2) to the receiver (3) via a network or stored on a data carrier.

8. Method according to claims 5 to 7, wherein the transmitter (2) is formed by a development system of a software component manufacturer (OEM) for the development of software components (SWK).

9. Method according to claims 1 to 8, wherein the receiver (3) is formed by a target system device of a user for the execution of software components.

10. Method according to claim 9, wherein the receiver (3) has a programmable logic controller (SPS).

11. System (1) for the accelerated decryption of cryptographically protected payload data units (NDE), wherein the payload data unit (NDE) is formed by a software component (SWK) of a software component manufacturer (OEM), **characterised by**:
(a) a transmitter (2) which has:
- a first encryption unit (2A) for the asymmetrical encryption of a cryptographic key (K_{OEM}) by means of a public key (K_{PUB});
- a second encryption unit (2D) for encrypting at least one payload data unit (NDE) by means of the cryptographic key (K_{OEM}), and
- an interface (2E) for providing the encrypted payload data unit (ENC-NDE), the asymmetrically encrypted key (ENC-K_{OEM}) and a related key identification (K_{OEM}-ID) of the cryptographic key (K_{OEM}) ;
(b) transportation means for transporting the encrypted payload data unit (ENC-NDE), the asymmetrically encrypted key (ENC-K_{OEM}) and the related key identification (K_{OEM}-ID) of the cryptographic key (K_{OEM}); and with
(c) a receiver (3) which has:
- a testing unit (3A) for verifying with the aid of the received key identification (K_{OEM}-ID) whether the transported asymmetrically encrypted key (ENC-K_{OEM}) is already present in a decrypted form in the receiver (3);
- a first decryption unit (3C) for decrypting the received asymmetrically encrypted key (ENC-K_{OEM}) by means of a private key (K_{PRIV}) if the verification of the related key identification (K_{OEM}-ID) of the cryptographic key (K_{OEM}) shows that the received encrypted cryptographic key (K_{OEM}) is not yet present in a decrypted form in the receiver (3);
- a protected storage unit (3D) for storing the private key (K_{PRIV}) ;
- a second decryption unit (3E) which decrypts the received cryptographically encrypted payload data unit (ENC-NDE) using the cryptographic key (K_{OEM}) already present in the receiver in decrypted form or using the cryptographic key (K_{OEM}) decrypted by the first decryption unit (3C).

12. Transmitter (2) for a system (1) for the accelerated decryption of cryptographically protected payload data units (NDE) according to claim 11, with:
- a first encryption unit (2A) for the asymmetrical encryption of a cryptographic key (K_{OEM}) by means of a public key (K_{PUB}) ;
- a second encryption unit (2D) for encrypting at least one payload data unit (NDE) by means of the cryptographic key (K_{OEM}) ; and with
- an interface (2E) for providing the encrypted payload data unit (ENC-NDE), the asymmetrically encrypted key (ENC-K_{OEM}) and a related key identification (K_{OEM}-ID) of the cryptographic key (K_{OEM}).

13. Receiver (3) for a system for the accelerated decryption of cryptographically protected payload data units (NDE) according to claim 11, with:
- a testing unit (3A) for verifying with the aid of the received key identification (K_{OEM}-ID) whether the transported asymmetrically encrypted key (ENC-K_{OEM}) is already present in a decrypted form in the receiver (3);
- a first decryption unit (3C) for decrypting the received asymmetrically encrypted key (ENC-K_{OEM}) by means of a private key (K_{PRIV}) if the verification of the related key identification (K_{OEM}-ID) of the cryptographic key (K_{OEM}) shows that the received encrypted cryptographic key (K_{OEM}) is not yet present in a decrypted form; and with
- a second decryption unit (3E) which decrypts the received cryptographically encrypted payload data unit (ENC-NDE) using the cryptographic key (K_{OEM}) already present in a decrypted form in the receiver (3) or using the cryptographic key (K_{OEM}) decrypted by the first decryption unit (3C).

14. Computer program for carrying out the method according to claims 1 to 10.

## Revendications

1. Procédé pour le décryptage accéléré d'unités de données utiles (NDE) protégées de façon cryptographique,
dans lequel l'unité de données utiles (NDE) est constituée par un composant de logiciel (SWK) d'un fabricant de composants de logiciels (OEM), **caractérisé par** les étapes suivantes :
(a) décryptage (S5) d'une clé cryptographique cryptée de façon asymétrique (ENC-K_{OEM}) reçue par un dispositif récepteur (3) au moyen d'une clé privée (K_{PRIV}), au cas où la vérification d'une identification de clé (K_{OEM}-ID) associée reçue de la clé cryptographique (K_{OEM}) montre que la clé cryptographique (K_{OEM}) est présente dans le dispositif récepteur (3) sans être encore décryptée, dans lequel la clé privée (K_{PRIV}) est déposée dans une unité de mémoire protégée (3D) du dispositif récepteur (3) ; et
(b) décryptage (S6) d'une unité de données utiles cryptée de façon cryptographique (ENC-NDE) reçue avec la clé cryptographique (K_{OEM}) présente dans le dispositif récepteur (3) ou avec la clé cryptographique (K_{OEM}) décryptée au moyen de la clé privée (K_{PRIV}), au cas où la clé cryptographique (K_{OEM}) n'est pas présente dans le dispositif récepteur (3).

2. Procédé selon la revendication 1,
dans lequel, au cas où la vérification de l'identification de clé (K_{OEM}-ID) reçue montre que la clé cryptographique (K_{OEM}) associée n'est pas encore présente dans le dispositif récepteur (3), la clé cryptographique (K_{OEM}) décryptée au moyen de la clé privée (K_{PRIV}) conjointement avec son identification de clé (K_{OEM}-ID) associée est mise en mémoire dans le dispositif récepteur (3).

3. Procédé selon la revendication 1,
dans lequel la clé cryptographique (K_{OEM}) est constituée par une clé de session du fabricant de composants de logiciels (OEM).

4. Procédé selon l'une des revendications 1 à 3,
dans lequel l'identification de clé (K_{OEM}-ID) est constituée par une valeur de hachage ou de vérification de la clé cryptographique (K_{OEM}) correspondante.

5. Procédé selon l'une des revendications 1 à 3,
dans lequel l'identification de clé (K_{OEM}-ID) est constituée par un nombre aléatoire engendré par un générateur de hasard (2F) d'un dispositif émetteur (2).

6. Procédé selon l'une des revendications 1 à 3,
dans lequel l'identification de clé (K_{OEM}-ID) est constituée par une valeur de comptage engendrée par un compteur (2F) du dispositif émetteur (2).

7. Procédé selon l'une des revendications 5 à 6,
dans lequel l'unité de données utiles cryptée (ENC-NDE), la clé cryptographique cryptée de façon asymétrique (ENC-K_{OEM}) associée et son identification de clé (K_{OEM}-ID) sont transportées du dispositif émetteur (2) au dispositif récepteur (3) par un réseau ou mises en mémoire dans un support de données.

8. Procédé selon l'une des revendications 5 à 7,
dans lequel le dispositif émetteur (2) est constitué par un dispositif de développement d'un fabricant de composants de logiciels (OEM) pour le développement de composants de logiciels (SWK).

9. Procédé selon l'une des revendications 1 à 8,
dans lequel le dispositif récepteur (3) est constitué par un dispositif à système cible d'un utilisateur pour la mise en oeuvre de composants de logiciels.

10. Procédé selon la revendication 9,
dans lequel le dispositif récepteur (3) comprend une commande à mémoire programmable (SPS).

11. Système (1) pour le décryptage accéléré d'unités de données utiles (NDE) protégées de façon cryptographique,
dans lequel l'unité de données utiles (NDE) est constituée par un composant de logiciel (SWK) d'un fabricant de composants de logiciels (OEM), **caractérisé par** :
(a) un dispositif émetteur (2) qui comprend :
- une première unité de cryptage (2A) pour le cryptage asymétrique d'une clé cryptographique (K_{OEM}) au moyen d'une clé publique (K_{PUB}) ;
- une seconde unité de cryptage (2D) pour le cryptage d'au moins une unité de données utiles (NDE) au moyen de la clé cryptographique (K_{OEM}) et
- une interface (2E) pour la fourniture de l'unité de données utiles cryptée (ENC-NDE), de la clé cryptée de façon asymétrique (ENC-K_{OEM}) et d'une identification de clé (K_{OEM}-ID) associée de la clé cryptographique (K_{OEM}) ;
(b) des moyens de transport (4) pour le transport de l'unité de données utiles cryptée (ENC-NDE), de la clé cryptée de façon asymétrique (ENC-K_{OEM}) et de l'identification de clé (K_{OEM}-ID) associée de la clé cryptographique (K_{OEM}) ; et avec
(c) un dispositif récepteur (3) qui comprend :
- une unité de vérification (3A) pour vérifier, au moyen de l'identification de clé (K_{OEM}-ID) reçue, si la clé cryptée de façon asymétrique (ENC-K_{OEM}) transportée est déjà présente sous forme décryptée dans le dispositif récepteur (3) ;
- une première unité de décryptage (3C) pour le décryptage de la clé cryptée de façon asymétrique (ENC-K_{OEM}) reçue au moyen d'une clé privée (K_{PRIV}), dans le cas où la vérification de l'identification de clé (K_{OEM}-ID) associée de la clé cryptographique (K_{OEM}) montre que la clé cryptographique (K_{OEM}) reçue cryptée n'est pas encore présente sous forme décryptée dans le dispositif récepteur (3) ;
- une unité de mémoire protégée (3D) pour le dépôt de la clé privée (K_{PRIV}) :
- une seconde unité de décryptage (3E) qui décrypte l'unité de données utiles cryptée de façon cryptographique (ENC-NDE) reçue avec la clé cryptographique (K_{OEM}) déjà présente sous forme décryptée dans le dispositif récepteur ou avec la clé cryptographique (K_{OEM}) décryptée par la première unité de décryptage (3C).

12. Dispositif émetteur (2), pour un système (1) pour le décryptage accéléré d'unités de données utiles (NDE) protégées de façon cryptographique selon la revendication 11, avec :
- une première unité de cryptage (2A) pour le cryptage asymétrique d'une clé cryptographique (K_{OEM}) au moyen d'une clé publique (K_{PUB}) ;
- une seconde unité de cryptage (2D) pour le cryptage d'au moins une unité de données utiles (NDE) au moyen de la clé cryptographique (K_{OEM}) ; et avec
- une interface (2E) pour la fourniture de l'unité de données utiles cryptée (ENC-NDE), de la clé cryptée de façon asymétrique (ENC-K_{OEM}) et d'une identification de clé (K_{OEM}-ID) associée de la clé cryptographique (K_{OEM}).

13. Dispositif récepteur (3), pour un système pour le décryptage accéléré d'unités de données utiles (NDE) protégées de façon cryptographique selon la revendication 11, avec :
- une unité de vérification (3A) pour vérifier, au moyen de l'identification de clé (K_{OEM}-ID) reçue, si la clé cryptée de façon asymétrique (ENC-K_{OEM}) transportée est déjà présente sous forme décryptée dans le dispositif récepteur (3) ;
- une première unité de décryptage (3C) pour le décryptage de la clé cryptée de façon asymétrique (ENC-K_{OEM}) reçue au moyen d'une clé privée (K_{PRIV}), dans le cas où la vérification de l'identification de clé (K_{OEM}-ID) associée de la clé cryptographique (K_{OEM}) montre que la clé cryptographique (K_{OEM}) reçue n'est pas encore présente sous forme décryptée ; et avec :
- une seconde unité de décryptage (3E) qui décrypte l'unité de données utiles cryptée de façon cryptographique (ENC-NDE) reçue avec la clé cryptographique (K_{OEM}) déjà présente sous forme décryptée dans l'unité réceptrice (3) ou avec la clé cryptographique (K_{OEM}) décryptée par la première unité de décryptage (3C).

14. Programme informatique pour la mise en oeuvre du procédé selon l'une des revendications 1 à 10.
